# EUROPEAN PATENT SPECIFICATION

(11) **EP 2 530 490 B1**
(45) Date of publication and mention of the grant of the patent: **27.02.2019**
(21) Application number: 12170342.5
(22) Date of filing: 31.05.2012
(51) Int. Cl.: G01T 1/17

(54) **DEVICE FOR RADIATION DETECTION, RADIATION DETECTION SYSTEM AND RADIATION DETECTION METHOD**
VORRICHTUNG ZUR STRAHLUNGSERFASSUNG, STRAHLUNGSERFASSUNGSSYSTEM UND STRAHLUNGSERFASSUNGSVERFAHREN
DISPOSITIF DE DÉTECTION DE RAYONNEMENT, SYSTÈME DE DÉTECTION DE RAYONNEMENT ET PROCÉDÉ DE DÉTECTION DE RAYONNEMENT

(30) Priority: 03.06.2011 US 201113153026; 10.05.2012 JP 2012108492
(43) Date of publication of application: 05.12.2012
(73) Proprietor: Toshiba Medical Systems Corporation, Otawara-shi, Tochigi-ken 324-0036 (JP)
(72) Inventor: WANG, Gin-Chung, Tochigi, 324-8550 (JP)
(74) Representative: Moreland, David

(56) References cited:
- WO-A1-97/07591
- US-A1- 2006 056 576
- US-A1- 2010 270 473

## Description

### FIELD

Embodiments described herein relate generally to a device for radiation detection, a radiation detection system and a radiation detection method.

### BACKGROUND

In positron emission tomography (PET) imaging, a radiopharmaceutical agent is administered, via injection, inhalation, and/or ingestion, to a patient. The physical and bio-molecular properties of the agent then concentrate at specific locations in the human body. The actual spatial distribution, intensity of the point and/or region of accumulation, as well as the kinetics of the process from administration and capture to eventual elimination, all have clinical significance. During this process, the positron emitter attached to the radiopharmaceutical agent emits positrons according to the physical properties of the isotope, such as half-life, branching ratio, etc.

Each positron interacts with an electron of the object, is annihilated and produces two gamma rays at 511 keV, which travel at substantially 180 degrees apart. The two gamma rays then cause a scintillation event at a scintillation crystal of the PET detector, which detects the gamma rays thereby. By detecting these two gamma rays, and drawing a line between their locations or "line-of-response," the likely location of the original annihilation is determined. While this process only identifies one line of possible interaction, accumulating a large number of these lines, and through a tomographic reconstruction process, the original distribution is estimated with useful accuracy. In addition to the location of the two scintillation events, if accurate timing - within a few hundred picoseconds - is available, time-of-flight calculations are also made in order to add more information regarding the likely position of the annihilation event along the line. A specific characteristic of the isotope (for example, energy of the positron) contributes (via positron range and co-linearity of the two gamma rays) to the determination of the spatial resolution for a specific radiopharmaceutical agent.

The above process is repeated for a large number of annihilation events. While every case needs to be analyzed to determine how many scintillation events are required to support the desired imaging tasks, conventionally, a typical 100 cm long scan by using FDG (fluoro-deoxyglucose) study accumulates about 100 million counts or events.

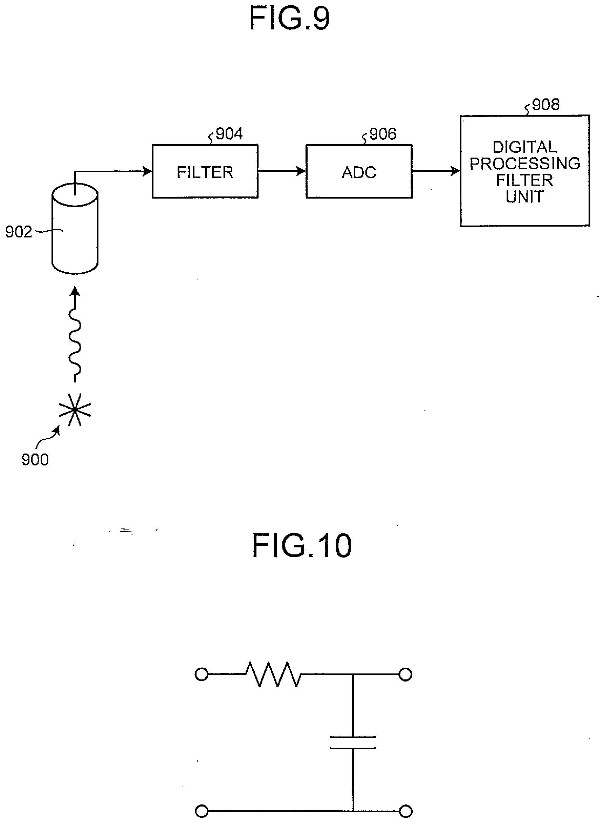

Figure 9 is a functional block diagram showing a conventional PET system and Figure 10 illustrates a conventional filter for the conventional PET system shown in Figure 9. Conventionally, as shown in Figure 9, detection of an event 900 is performed by a radiation detector, photomultiplier tube (PMT) 902. The PMT 902 has an analog output signal which is filtered by a filter 904 and converted from an analog signal to a digital signal by an analog-to-digital converter (ADC) 906. The filtered and converted signal is then output to a digital signal processing unit 908, which performs event counting and time sampling, executing algorithms for energy, timing, and positions of events. The filter 904 is conventionally designed to operate effectively at a variety of count rates, and conventionally includes an RC filter, as shown in Figure 10.

US 2010/0270473 describes a method for determining the intensity of ionizing radiation using a detector with a multiplicity of direct-conversion detector elements. Provision is made for feedback, by which, firstly, the pulse shape of the signal pulses, and secondly, the clock rate of the clocked pulse-height discriminator are set as a function of the signal frequency.

US 2006/0056576 describes a method and system of counting and tagging radiation energy received by a radiation detector, designed to dynamically control the sampling window or shaping time characteristics of a photon counting detector to accommodate variations of flux experienced by the detector.

WO 97/07591 describes a high speed signal processing system that accepts input data from a detector-preamplifier and produces a spectral analysis of the x-rays illuminating the detector.

### BRIEF DESCRIPTION OF THE DRAWINGS

Figure 1 is a functional block diagram illustrating an adaptive filtering and an adaptive sampling according to an aspect of this disclosure;
Figures 2A-2D illustrate examples of adaptive filters included in the adaptive filter unit shown in Figure 1;
Figure 3 is a functional block diagram illustrating an adaptive filtering and an adaptive sampling performed by a digital signal processing unit according to another aspect of this disclosure;
Figure 4 shows a functional hardware arrangement of a digital signal processing unit according to Figures 1 and 3;
Figures 5A-C illustrates algorithms, by way of flowcharts, for adaptive filtering and adaptive sampling according to aspects of this disclosure;
Figure 6 illustrates algorithms, by way of a flowchart, for processes of transmitting a control signal based on an estimated rate count according to aspects of this disclosure;
Figure 7 illustrates a modified aspect of the functional block diagram shown in Figure 1;
Figure 8 illustrates a modified aspect of the functional block diagram shown in Figure 3;
Figure 9 is a functional block diagram showing a conventional PET system; and
Figure 10 illustrates a conventional filter for the conventional PET system shown in Figure 9.

### DETAILED DESCRIPTION

This disclosure is directed to devices, systems, algorithms, and processes for radiation detection, and specifically for optimizing a signal-to-noise ratio of measurable energy at a variety of count rates by utilizing adaptive filters and analog-to-digital converters having adaptive sampling rates.

As noted above, conventionally, filters used in radiation detection systems, such as PET systems, for energy information are conventionally optimized for energy resolution characteristics which accommodate a wide range of operating conditions. These filters are conventionally optimized for low count rates. However, such filters are not universally optimized for different count rates, and the conventional optimization starts to degrade due to pile-up effects at high count rates. Aspects of this disclosure are directed to correcting this degradation and efficiently managing obtained count information, and specifically to a feedback system which estimates and monitors a count rate of detected events, detected by a radiation detector, to adaptively adjust filter parameters for optimized performance at different count rates and/or adaptively adjust a sampling rate of an analog-to-digital converter to reduce power usage.

In one embodiment, this disclosure is directed to a device for radiation detection including a rate counter and a controller. The rate counter is configured to estimate, based on a signal filtered by an adjustable filter, a count rate of events detected by the radiation detector. The controller is configured to generate a control signal (a filtering control signal) based on the estimated count rate, and output a control signal (a filtering control signal) to the filter. The control signal (the filtering control signal) causes the filter to adjust the filtering to optimize an energy resolution. The device includes the filter configured to filter the signal output from the radiation detector, and the filter includes an adjustable portion to adjust filtering applied to the signal. The filter outputs the filtered signal to the rate counter.

The device further includes an analog-to-digital converter (ADC) configured to convert the signal from an analog signal to a digital signal, the ADC having an adjustable sampling rate at which the analog signal is sampled. In this aspect, the controller is further configured to generate a control signal (a sampling control signal) based on the estimated count rate, and output the control signal (the sampling control signal) to the ADC. This control signal (this sampling control signal) causes the ADC to adjust the sampling rate based on the estimated count rate. In a further aspect, it is preferable the adjustable portion of the filter has an RC time constant that is adjusted by the control signal (the filtering control signal), and it is further preferable the RC time constant is shortened from an initial value by an amount having a direct relationship with an amount the estimated count rate increases above a threshold value.

In some aspects, the filter includes resistors and capacitors that are switched into and out of operation by the control signal (the filtering control signal) to adjust the RC time constant. In other aspects, the filter includes a voltage-controlled component, including at least one of a voltage-controlled capacitor, a voltage-controlled diode capacitor, and a voltage-controlled resistor. In these aspects, the control signal (the filtering control signal) is a bias voltage that adjusts the voltage-controlled component to adjust the RC time constant of the filter. It is also preferable the filter is a bandwidth-adjustable filter.

In one aspect, the filter is a digital filter, and the ADC converts the signal output from the radiation detector from the analog signal to the digital signal before the filter applies the filtering to the signal. In a further aspect, the device further includes an analog filter configured to filter the analog signal before the analog signal is converted to the digital signal. The analog filter includes an adjustable portion (an analog adjustable portion) to adjust an analog filtering applied to the analog signal, and the controller is further configured to generate a control signal (an analog filtering control signal) based on the estimated count rate, and output the control signal (the analog filtering control signal) to the analog filter. This control signal (this analog filtering control signal) causes the analog filter to adjust the analog filtering to optimize the energy resolution.

In another aspect, the filter is an analog filter. Here, the ADC converts the signal from the analog signal to the digital signal after the filter applies the filtering to the signal.

In a further aspect of this embodiment, sampling control signal is generated to reduce the sampling rate of the ADC from an initial value by an amount having a direct relationship with an amount the estimated count rate reduces from a predefined value. Preferably, the initial value is a fastest sampling rate of the ADC.

In a further embodiment, this disclosure is directed to a radiation detection system according to claim 11.

In another aspect of this embodiment, the radiation detector is one of a photo multiplier tube (PMT), a cadmium telluride (CdTe) based radiation detector, and a silicon photomultiplier (SiPM).

According to another embodiment, this disclosure is directed to a radiation detection method according to claim 13.

According to some of the above-noted aspects of this disclosure, the adjustable portion of a filter affects an RC time constant of the filter, and thus the shaping characteristics of an output pulse signal from a radiation detector. In preferred aspects, the filter is a bandwidth-adjustable filter, and can include a combination of low-pass filter, high-pass filter and band-pass filter circuitry, employed in either of an analog or digital filter (or a combination thereof).

In these aspects, the RC time constant is shortened by an amount having a direct relationship with an amount the count rate exceeds a threshold value. In other words, the RC time constant is shortened when the count rate increases. For example, when utilizing a voltage-controlled diode capacitor biased with voltage feedback, the RC time constant shortens when count rate increases as the capacitance of the voltage-controlled diode capacitor reduces with a higher bias voltage. The shorter RC time constant reduces pile-up effects during high count rates, thus yielding better signal-to-noise ratios and optimizing the filter in response to operating conditions, specifically the count rate, to optimize an energy resolution of detected events.

Since the filter is adjustable to respond to operating conditions, the filter is applicable to a wide variety of radiation detectors that produce an electronic output signal. Such detectors include PMTs, cadmium telluride (CdTe) based radiation detectors, and silicon photomultipliers (SiPM). However, aspects of this disclosure are applicable to other radiation detectors as well.

Aspects of an adjustable filter can also be embodied as a digital filter, which receives an analog signal from the radiation detector after being converted to a digital signal by an ADC. Furthermore, aspects of this disclosure are directed to utilizing both an analog filter and a digital filter, wherein one or both of these filters include adjustable portions that are adjusted based on an estimated and monitored count rate.

In the above-noted aspects, the ADC has a sampling rate at which an analog signal is sampled, and includes an input to receive a control signal (a sampling control signal) from a rate counter to adjust the sampling rate based on an estimated count rate. Preferably, the ADC is initially set to an initial value, which can be a fastest sampling rate of the ADC. The sampling rate can then be reduced from the initial value by an amount having a direct relationship with an amount that the count rate reduces from a predefined value. As a result, power savings can be achieved by reducing the sampling rate of the ADC when the count rate does not require the fastest sampling rate.

In preferred aspects of this disclosure, an output of the ADC is connected to a digital signal processing unit (DSP), which in some aspects includes a digital filter with an adjustable portion, as described above. The DSP also preferably includes a rate counter, which estimates a count rate of events detected by the radiation detector.

The DSP includes output circuitry for outputting control signals to adjustable portions of a filter unit including an analog filter and the ADC. These control signals adjust the adjustable portions of these components (i.e., the RC time constant of the analog filter and the sampling rate of the ADC), based on the estimated count rate, to optimize an energy resolution of the radiation detector.

In other aspects, the DSP receives an analog signal that has been filtered by an analog filter, and estimates a rate count based on the received analog signal. Then, the DSP generates a control signal to control an adjustable parameter of the analog filter based on the estimated count rate,

The described embodiments, together with further advantages, will be best understood by reference to the following detailed description taken in conjunction with the accompanying drawings, wherein like reference numerals designate identical or corresponding parts throughout the several views.

Hereinafter, embodiments of a device for radiation detection, a radiation detection system and a radiation detection method will be described in detail with reference to the accompanying drawings.

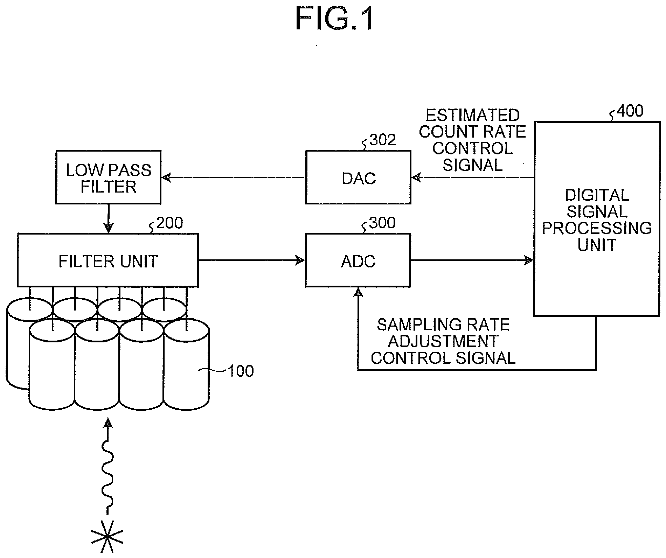

Figure 1 is a functional block diagram illustrating an adaptive filtering and an adaptive sampling according to an aspect of this disclosure. Figure 1 illustrates a functional block diagram of components included in an adaptive filtering and an adaptive sampling procedure according to embodiments disclosed herein. A detector 100 or an array of detectors 100 output detection signals to a filter unit 200. Although each detector 100 can be embodied as a discrete channel having its own filter unit 200, the aspect shown in Figure 1 includes an eight-channel filter unit. It should be appreciated by those skilled in the art that varying channel usage can be implemented without deviating from the scope of this disclosure.

The output detection signals from the detector 100 (hereinafter referred to as output signals) are electronic pulses resulting from the detector 100 detecting an event (a particle interaction) by receiving radiation therefrom. In radiation detecting, this output pulse as the output signals is shaped by a filter to remove noise for accurate counting of detected events.

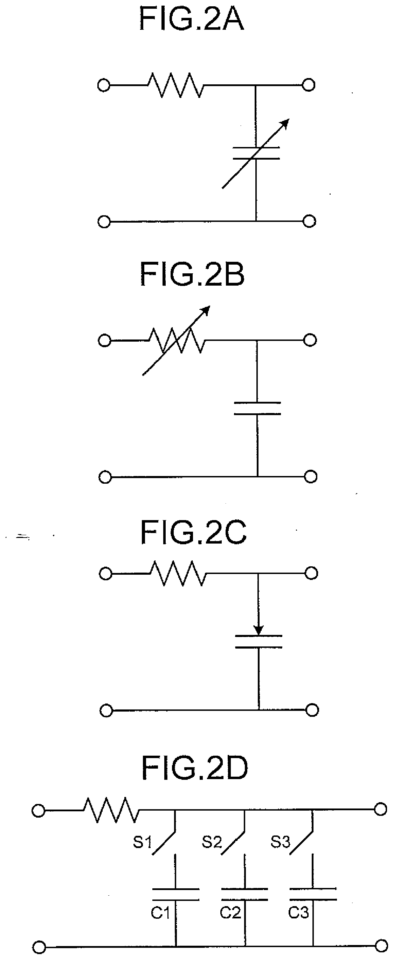

The filter unit 200 applies filtering to the analog output signal of the detector 100 and includes an adjustable portion. The filtering causes shaping of the pulse of the output signal. Figures 2A-2D illustrate examples of adaptive filters included in the adaptive filter unit shown in Figure 1. Figures 2A-2D illustrate examples of adaptive filters which can be implemented into the filter unit 200. Although the adaptive filters shown in Figures 2A-2D are shown as low-pass filters, it should be appreciated by those skilled in the art that the filter unit 200 can also include high-pass filters and band-pass filters. Preferably, the filter unit 200 incorporates bandwidth adjustable filters, and the filters are adjustable to control integration and differential times thereof continuously in response to an estimated count rate control signal. The estimated count rate control signal corresponds to the filtering control signal described above.

Figure 2A shows a voltage-controlled capacitor-based low-pass filter, Figure 2B shows a voltage-controlled resistor-based low-pass filter, and Figure 2C shows a voltage-controlled diode capacitor-based low-pass filter. The filter unit 200 can also include a switch-controlled filter, as shown in Figure 2D. Here, various capacitors C1, C2, and C3 are provided in parallel, and can be placed into an operational state by way of switches S1, S2, and S3. The filters shown in Figures 2A-2C utilize bias voltages to adjust parameters thereof, thereby adjusting RC time constants thereof. On the other hand, Figure 2D utilizes a control signal to activate any of switches S1-S3 to vary the RC time constant. It should be appreciated by those skilled in the art that switches can also be provided for a plurality of resistors to vary the RC time constant, and other voltage controlled components can be utilized to vary an RC time constant of a filter.

Referring again to Figure 1, the output signal from the detector 100 as the radiation detector, after being filtered by the filter unit 200, is then converted to a digital signal by an analog-to-digital converter (ADC) 300. The ADC 300 has a sampling rate at which the analog signal is sampled, wherein the sampling rate is adjustable by a control signal. The sampling rate is preferably initially set to a maximum or fastest sampling rate of the ADC 300. The resulting digital signal is then processed by a digital signal processing unit (DSP) 400, the structure of which is discussed below.

The DSP 400 outputs control signals to adjust the adjustable portions of the filter unit 200 and the ADC 300. In particular, the digital signal processing unit 400 outputs an estimated count rate control signal to a digital-to-analog converter (DAC) 302, which after passing through a low-pass filter, is input to the filter unit 200. This estimated count rate control signal serves to change the bias voltage, and thus the RC time constant, of an adjustable functional component of the filter unit 200, e.g., as shown in Figures 2A-2C. Alternatively, the estimated count rate control signal is a digital control signal for instructing the filter unit 200 to open or close various switches of the filter unit 200 to change the RC time constant of the filtering performed by the filter unit 200, e.g., as shown in Figure 2D.

The DSP 400 also generates a control signal (a sampling control signal) to cause a sampling rate adjustment at the ADC 300. In Figure 1, the sampling control signal is illustrated as the sampling rate adjustment control signal. As note above, the sampling rate (the rate at which the analog output signal from the radiation detector is sampled) is preferably initially set to a maximum or fastest sampling rate of the ADC 300. However, when the count rate falls below a predetermined threshold value, the fastest sampling is not necessary for adequate energy resolution. Accordingly, the DSP 400 adjusts the sampling rate of the ADC 300 to slow the sampling rate by an amount having a direct relationship with an amount the count rate has fallen below a predetermined threshold value, so as to conserve energy usage.

As can be appreciated by those skilled in the art, the above-discussed aspects allow for the filtering of an output signal from a radiation detector and the sampling of that output signal to be adjusted in real-time and continuously as events are detected. Accordingly, degradation due to pile-ups can be avoided while efficiently operating an ADC.

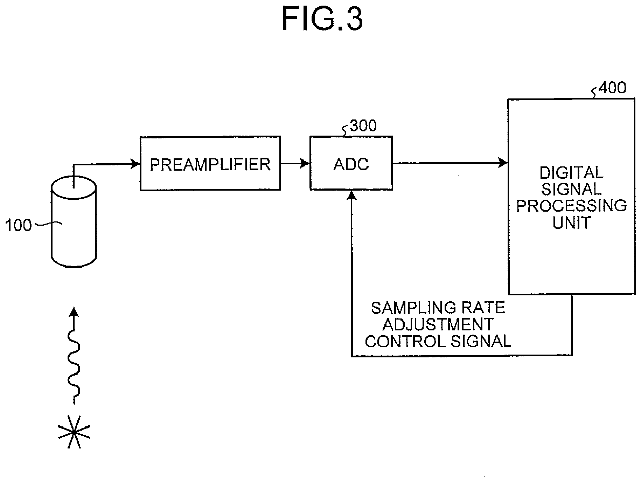

In an alternative embodiment, the filtering performed by the filter unit 200 (i.e., the analog filtering) is performed in the digital signal processing unit (DSP) 400 as digital filtering, either as a substitute or in combination. Figure 3 is a functional block diagram illustrating an adaptive filtering and an adaptive sampling performed by a digital signal processing unit according to another aspect of this disclosure. Figure 3 illustrates this alternative embodiment. Here, the detector 100 outputs an analog signal, through a preamplifier, to an ADC 300, which generates a digital signal to be processed by the DSP 400. The digital signal processing unit 400 internally estimates the count rate and adjusts parameters of the digital filtering performed therein, while also outputting a sampling rate adjustment to the ADC 300, based on the estimated count rate.

As noted above, digital filtering can be performed in addition to analog filtering. Here, adverting back to Figure 1, the DSP 400 is arranged as shown in Figure 1, but further includes the digital filter features noted above.

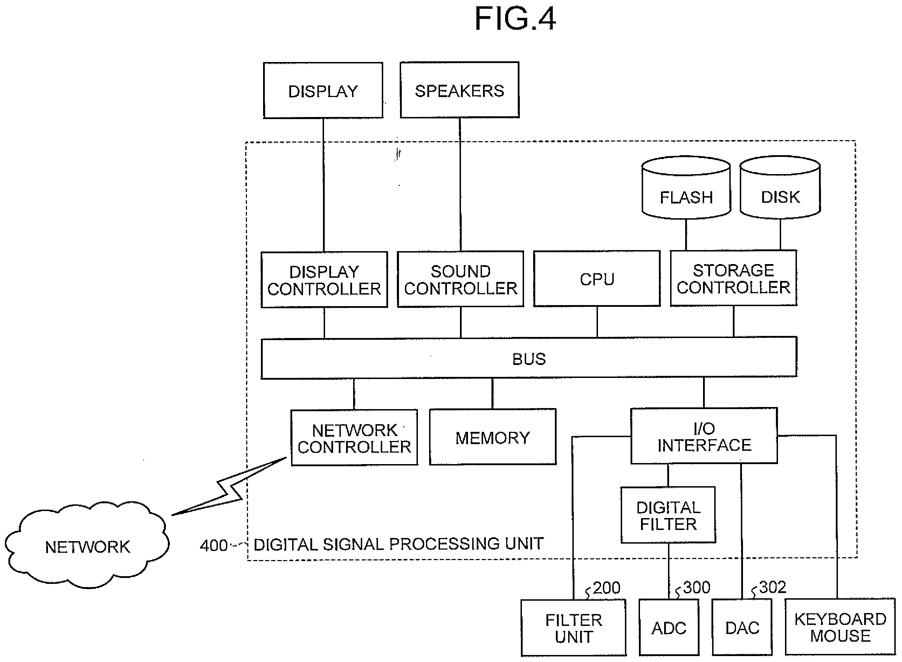

Aspects of the above-noted digital filtering, control processing, and generating of signals to adjust an ADC or a filter are preferably implemented utilizing a computer processor. Figure 4 shows a functional hardware arrangement of a digital signal processing unit according to Figures 1 and 3. For example, the DSP 400, as shown in Figure 4, preferably includes a central processing unit (CPU), which can include a plurality of processing cores. As one of ordinary skill in the art would recognize, the CPU can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL, Verilog or any other hardware description language and the code may be stored in an electronic memory directly within the FPGA or CPLD, or as a separate electronic memory, such as a memory connected to the CPU by way of a common BUS as shown in Figure 4.

In some aspects, the electronic memory is non-volatile, such as ROM, EPROM, EEPROM or FLASH memory. The electronic memory may also be volatile, such as static or dynamic RAM, and a processor, such as a microcontroller or microprocessor, may be provided to manage the electronic memory as well as the interaction between the FPGA or CPLD and the electronic memory.

Alternatively, the CPU executes computer programs including computer-readable instructions that perform the functions described herein. The program can be stored on various mediums, including any of the above-described non-transitory electronic memories (such as a solid state drive or flash drive) or a disk drive, such as a hard disk, CD or DVD drive. Further, the computer-readable instructions may be provided as a utility application, background daemon, or component of an operating system, or combination thereof, executing in conjunction with a processor, such as a Xenon processor from Intel of America or an Opteron processor from AMD of America and an operating system, such as Microsoft VISTA, UNIX, Solaris, LINUX, Apple, MAC-OSX and other operating systems known to those skilled in the art.

Signals received by the DSP 400 are processed to obtain an energy value of an event and/or a timing of an event. Timing and energy evaluation information is displayed on a display, such as a LCD display, by way of a display controller. The information can also be stored locally, by a storage controller, to a storage device or transmitted by way of a network controller to networked devices.

In some aspects, the DSP 400 includes special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)). Preferably, the DSP 400 includes a discrete digital filter, as shown in Figure 4, which performs mathematical processes on input signals and includes FPGAs or ASICs. Alternatively, the CPU of the DSP 400 is configured by software to perform digital filtering.

The DSP 400 is preferably embodied in a personal computer and, as noted above, includes a display controller coupled to a display. The DSP 400 also includes an input/output interface for receiving and transmitting signals between the ADC 300, the DAC 302, and the filter unit 200. Preferably, the input/output interface communicates with peripherals for user control of aspects of the DSP 400 by way of a keyboard and mouse. Additionally, a printer (not shown) can be provided. And also, the DPS 400 can output sound from speakers by a sound controller.

It should be appreciated that the DSP 400 shown in Figure 4 is merely exemplary, and one or more processors in a multi-processing arrangement may also be employed to execute sequences of instructions contained in memory. In alternative embodiments, hard-wired circuitry may be used in place of or in combination with software instructions. Thus, embodiments are not limited to any specific combination of hardware circuitry and software.

Software is tangibly stored on computer readable medium of the DSP 400, including the memory and storage devices. Other examples of computer readable media are compact discs, hard disks, floppy disks, tape, magneto-optical disks, PROMs (EPROM, EEPROM, flash EPROM), DRAM, SRAM, SDRAM, or any other magnetic medium, compact discs (e.g., CD-ROM), or any other medium from which a computer can read. The software may include, but is not limited to, device drivers, operating systems, development tools, and applications software.

Computer code elements on the above-noted medium may be any interpretable or executable code mechanism, including but not limited to scripts, interpretable programs, dynamic link libraries (DLLs), Java classes and complete executable programs. Moreover, parts of the processing of aspects of this disclosure may be distributed for better performance, reliability and/or cost.

The DSP 400 estimates a count rate based on the pulsed output signals from the detector 100 as the radiation detector. Generally, counting is performed per channel or per detector 100 as the radiation detector, and is based on an amplitude threshold. Specifically, when an amplitude of an output signal (pulse) from a radiation detector 100 exceeds a predefined amplitude threshold, a count is made. The DSP 400 then calculates a number of counts per second, which is used as a count rate estimation. It should be appreciated that aspects of this disclosure are not limited to any particular count rate estimation process.

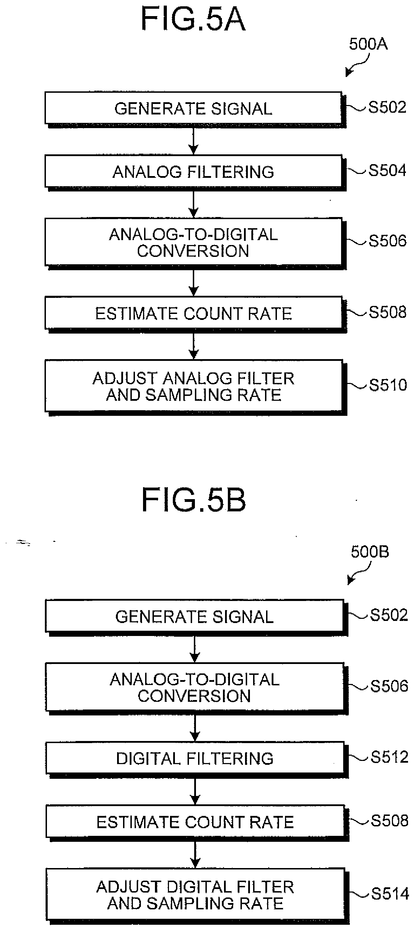

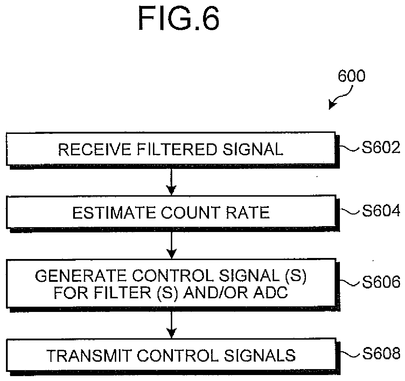

Figures 5A-C illustrates algorithms, by way of flowcharts, for adaptive filtering and adaptive sampling according to aspects of this disclosure. Algorithms and procedures in accordance with the above-noted aspects of adaptive filtering and adaptive sampling are shown in Figures 5A-5C and 6. Figure 5A illustrates an algorithm, by way of a flowchart 500A, of procedures of the systems shown in Figure 1. Figure 5B illustrates an algorithm, by way of a flowchart 500B, of procedures of the systems shown in Figure 3.

Flowchart 500A corresponds to adaptive analog filtering. At S502, events are detected by the detector 100 as the radiation detector, which results in the detector 100 as the radiation detector generating a signal and outputting the signal to the filter unit 200. The filter unit 200 performs analog filtering at S504 based on predefined parameters (i.e., a predefined RC time constant), and this filtered signal is subjected to analog-to-digital conversion at S506 by the ADC 300. The ADC 300 applies sampling according to a predefined sampling rate to generate a digital signal which is transmitted to the DSP 400.

The DSP 400, at S508, performs count rate estimation. Based on the estimated count rate, the DSP 400 adjusts a filtering parameter (i.e., an RC time constant) of the filter unit 200 at S510 by transmitting a corresponding control signal to the filter unit 200. Preferably, at S510, the DSP 400 also adjusts a sampling rate of the ADC 300 by transmitting a corresponding control signal to the ADC 300.

In an alternative embodiment (not shown) of the algorithm shown in flowchart 500A, the ADC 300 is not part of the count rate estimation process. Rather, S508 is performed with a threshold detector, which generates a trigger signal when it detects an event and sends the trigger signal to the DSP 400, which counts the event. Thus, count rate estimation is performed without applying digital filtering and without the ADC 300.

The algorithm illustrated in Figure 5B in flowchart 500B corresponds to adaptive digital filtering. Here, at S502, events are detected by the detector 100 as the radiation detector, which results in the radiation detector 100 generating a signal and outputting the signal to the ADC 300. At S506, analog-to-digital conversion is performed by ADC 300. The ADC 300 applies sampling according to a predefined sampling rate to generate a digital signal from the output signal, and outputs the digital signal to the DSP 400. The DSP 400 performs digital filtering at S512 based on predefined parameters (i.e., a predefined RC time constant), and the DSP 400, at S508, performs count rate estimation.

Based on the estimated count rate, the DSP 400 adjusts a filtering parameter (i.e., an RC time constant) of the digital filter at S514 by way of a corresponding control signal. Preferably, at S514, the DSP 400 also adjusts a sampling rate of the ADC 300 by transmitting a corresponding control signal to the ADC 300.

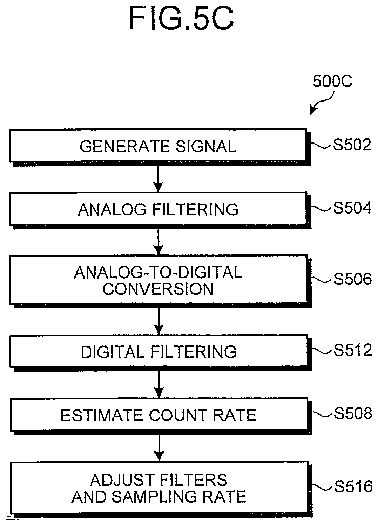

The algorithm illustrated in Figure 5C in flowchart 500C corresponds to a combination of adaptive analog filtering and adaptive digital filtering. At S502, events are detected by the detector 100 as the radiation detector and the detector 100 as the radiation detector generates an output signal, which is output to the filter unit 200. The filter unit 200 performs filtering at S504 based on predefined parameters (i.e., a predefined RC time constant), and this filtered signal is subjected to analog-to-digital conversion at S506 by the ADC 300. The ADC 300 applies sampling according to a predefined sampling rate to generate a digital signal which is transmitted to the DSP 400.

The DSP 400 performs digital filtering at S512 based on predefined parameters (i.e., a predefined RC time constant), and the DSP 400, at S508, performs count rate estimation. Based on the estimated count rate, the DSP 400 adjusts a filtering parameter (i.e., an RC time constant) of both the filter unit 200 and the digital filter at S516 by way of corresponding control signals. Preferably, at S516, the DSP 400 also adjusts a sampling rate of the ADC 300 by transmitting a corresponding control signal to the ADC 300.

As discussed above, the sampling rate of the ADC 300 is preferably slowed from a fastest setting thereof by an amount having a direct relationship with an amount the count rate is below a prescribed value. Further, it is preferable the RC time constant of the filter is shortened from a predefined value by an amount having a direct relationship with an amount the count rate exceeds a predefined value. These direct relationships can be linear, exponential, polynomial, or stepwise. However, other direct relationships can be used based on the particular type of radiation detector 100 and other operating conditions.

Although the algorithms shown by way of Figure 5 define adjustments being made to the filters and the sampling rate based on the estimated count rate, it should be appreciated by those skilled in the art that threshold values may be utilized in determining whether to adjust a filter or adjust a sampling rate. For example, upper and lower bound thresholds may be used to define regions of operation (specifically, ranges of count rates) in which the sampling rate of the ADC 300 should and should not be adjusted. Similarly, operational ranges can be predefined for controlling when the analog or digital filters noted above are adjusted. These ranges can be stored in discretized tables of the DSP 400, and compared with actual estimated count rates by the CPU of the DSP 400. Further, a plurality of ranges can be utilized.

Figure 6 illustrates algorithms, by way of a flowchart, for processes of transmitting a control signal based on an estimated rate count according to aspects of this disclosure. Figure 6 illustrates an algorithm of the DSP 400 by way of a flowchart 600. At S602, the DSP 400 receives a filtered signal. As discussed above, the filtered signal can be analog filtered, digital filtered, or analog and digital filtered. The DSP 400 then performs count rate estimation at S604.

The signal received by the DSP 400 at S602, in preferred aspects, is a digital signal. However, this is not necessary, but merely preferred. The signal received by the DSP 400 at S602 can also be an analog signal. Accordingly, in this embodiment, the ADC 300 shown in Figure 1 is not utilized in the count rate estimation process and the DSP 400 performs count rate estimation in an analog domain only. That is, the DSP 400 will estimate a count rate of events detected by the detector 100 as the radiation detector at S604 by utilizing an analog signal from the detector 100 as the radiation detector. For example, the analog signal can be compared to a predefined threshold amplitude value identifying an event.

After estimating the count rate at S604 from a received analog signal or a received digital signal, the DSP 400 determines control signals at S606 for transmission to the above-discussed analog and digital filters to control parameters thereof, based on the estimated count rate. That is, at S606, DSP 400 generate control signal(s) for filter(s) and/or ADC 300. The DSP 400 then transmits the control signals at S608 to respective analog filters (such as the filter unit 200), digital filters (such as the digital filter of the DSP 400), and analog-to-digital converters (such as the ADC 300), as appropriate. This algorithm is continuous with the detection of events, and is thus responsive to the output signals from the radiation detector 100.

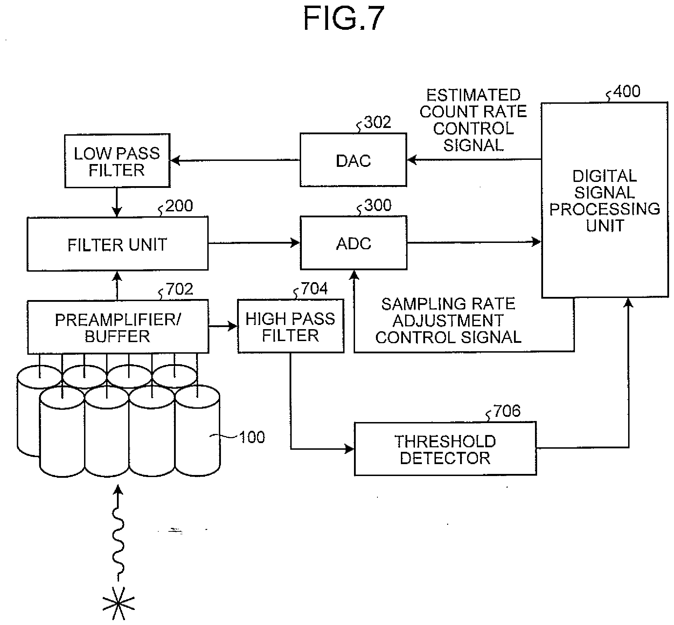

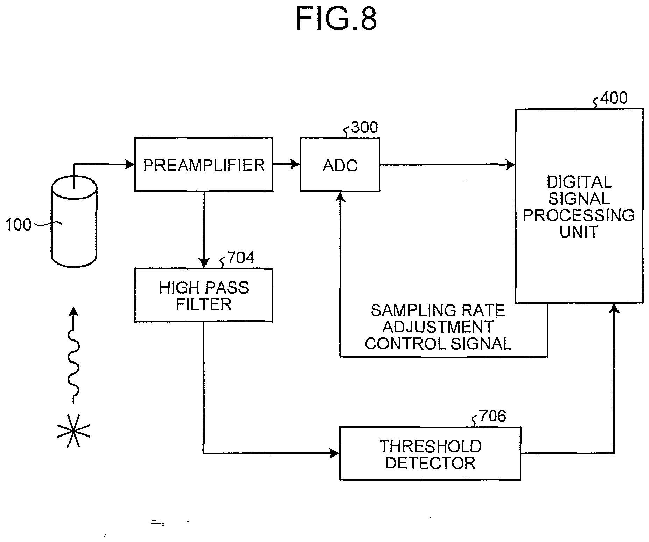

As discussed above, an alternative embodiment excludes the above-described ADC 300 from the count rate estimation process of the DSP 400. Examples are shown in Figures 7 and 8, which illustrate modified arrangements of those shown in Figures 1 and 3, respectively. Figure 7 illustrates a modified aspect of the functional block diagram shown in Figure 1 and Figure 8 illustrates a modified aspect of the functional block diagram shown in Figure 3.

In Figure 7, the radiation detector 100 outputs signals to a preamplifier/buffer 702, which in turn outputs an analog signal to the filter unit 200, discussed above, and separately to a high-pass filter 704. The high-pass filter 704 outputs a filtered signal to a threshold detector 706, which detects an event and outputs a trigger signal to the DSP 400. As a result of this arrangement, the DSP 400 estimates the count rate without utilizing the ADC 300, but can still perform the above-described control operations of outputting the estimated count rate control signal to the filter unit 200 and outputting the sampling rate adjustment control signal to the ADC 300.

In Figure 8, the embodiment shown in Figure 3 is modified to include the high-pass filter 704 connected to the preamplifier, where the threshold detector 706 detects an event and outputs a trigger signal to the DSP 400. Accordingly the count rate estimation process can be performed by the DSP 400, without utilizing the output from the ADC 300, while still performing control of the ADC 300 by the sampling rate adjustment control signal output from the DSP 400.

As described above, according to the embodiments, the count loss due to pile-up at high count rate can be minimized.

While certain embodiments have been described, these embodiments have been presented by way of example only, and are not intended to limit the scope of this disclosure. Indeed the novel devices, systems and methods described herein may be embodied in a variety of other forms; furthermore, various omissions, substitutions, and changes in the form of the devices, systems and methods described herein may be made without departing from the scope of the invention as claimed.

## Claims

1. A device for radiation detection, comprising:
an adjustable filter (200, 400), configured to perform filtering;
a rate counter (400) configured to estimate, based on a signal which is filtered by the adjustable filter (200, 400), a count rate of events detected by a radiation detector (100);
a controller (400) configured to generate a filtering control signal based on an estimated count rate which is the count rate estimated by the rate counter (400), and to output the filtering control signal to the filter (200, 400), the filtering control signal causing the filter (200, 400) to adjust the filtering to optimize an energy resolution; and
an analog-to-digital converter (300) configured to convert the signal from an analog signal to a digital signal, and having an adjustable sampling rate at which the analog signal is sampled;
**characterized in that**
the controller (400) is further configured to generate a sampling control signal based on the estimated count rate, and output the sampling control signal to the analog-to-digital converter (300), the sampling control signal being adapted to cause the analog-to-digital converter (300) to adjust the sampling rate based on the estimated count rate.

2. The device for radiation detection according to Claim 1, wherein the filter (200) includes an analog adjustable portion to adjust the filtering, wherein
the filter (200) is an analog filter and the analog adjustable portion of the filter has an RC time constant that is adjusted by the filtering control signal.

3. The device for radiation detection according to Claim 2, wherein the RC time constant is shortened from an initial value by an amount having a direct relationship with an amount the estimated count rate increases above a threshold value.

4. The device for radiation detection according to Claim 2, wherein the filter (200) includes a resistor or a capacitor that is switched into and out of operation by the filtering control signal to adjust the RC time constant.

5. The device for radiation detection according to Claim 2, wherein:
the filter (200) includes a voltage-controlled component, including at least one of a voltage-controlled capacitor, a voltage-controlled diode capacitor, and a voltage-controlled resistor; and
the filtering control signal is a bias voltage that adjusts the voltage-controlled component to adjust the RC time constant of the filter.

6. The device for radiation detection according to Claim 2, wherein the filter (200) is a bandwidth-adjustable filter.

7. The device for radiation detection according to Claim 2, wherein:
the analog-to-digital converter (ADC) (300) is configured to convert the signal output from the filter (200) from an analog signal to a digital signal and to output the digital signal to the rate counter (400).

8. The device for radiation detection according to Claim 1, wherein
the filter (400) is a digital filter and includes a digital adjustable portion to adjust the filtering, and the digital adjustable portion is adjusted by the filtering control signal.

9. The device for radiation detection according to Claim 8, wherein:
the analog-to-digital converter (ADC) (300) is configured to convert a signal output from the radiation detector (100) from an analog signal to a digital signal and to output the digital signal to the digital filter (400).

10. The device for radiation detection according to Claim 9, further comprising:
an analog filter (200) configured to filter the signal output from the radiation detector (100) before the ADC (300) converts the analog signal to the digital signal, the analog filter (200) including an analog adjustable portion to adjust an analog filtering applied to the analog signal, wherein
the controller (400) is further configured to generate an analog filtering control signal based on the estimated count rate, and to output the analog filtering control signal to the analog filter (200), the analog filtering control signal causing the analog filter (200) to adjust the analog filtering to optimize the energy resolution.

11. A radiation detection system, comprising:
a radiation detector (100) configured to generate an analog signal;
an analog filter (200) configured to filter the analog signal, the analog filter (200) including an analog adjustable portion to adjust filtering applied to the analog signal;
an analog-to-digital converter (ADC) (300) configured to convert the filtered analog signal to a digital signal, wherein the ADC (300) includes an adjustable sampling portion to adjust a sampling rate at which the analog signal is sampled; and
a digital signal processing unit (400) configured to (1) estimate, from the digital signal, a count rate of events detected by the radiation detector, (2) generate an analog filtering control signal based on the estimated count rate, and (3) output the analog filtering control signal to the analog adjustable portion of the analog filter (200) to adjust the filtering applied to the analog signal so as to optimize an energy resolution;
**characterized in that**
the digital signal processing unit (400) is further configured to generate a sampling control signal based on the estimated count rate, and output the sampling control signal to the adjustable sampling portion of the ADC (300) to adjust the sampling rate at which the analog signal is sampled.

12. The radiation detection system according to Claim 11, wherein the radiation detector (100) is one of a photomultiplier tube (PMT), a cadmium telluride (CdTe) based radiation detector, and a silicon photomultiplier (SiPM).

13. A radiation detection method, comprising:
estimating, by a rate counter (400), a count rate of events detected by a radiation detector (100) based on a signal which has been filtered by a filter (200, 400) having an adjustable parameter and converted from an analog signal to a digital signal by an analog-to-digital converter (300) having an adjustable sampling rate at which the analog signal is sampled;
generating, based on an estimated count rate which is the count rate estimated by rate counter (400), a filtering control signal to adjust the parameter of the filter (200, 400);
transmitting the filtering control signal to the filter (200, 400) to optimize an energy resolution;
**characterized by**
generating, based on the estimated count rate, a sampling control signal to adjust the sampling rate of the ADC (300); and
transmitting the sampling control signal to the analog-to-digital converter (300).

14. The radiation detection method according to Claim 13, further comprising:
converting the filtered signal from an analog signal to a digital signal by an analog-to-digital converter (ADC) (300), the ADC (300) having a sampling rate at which the analog signal is sampled.

## Patentansprüche

1. Vorrichtung zur Strahlungserfassung, umfassend:
einen einstellbaren Filter (200, 400), welcher konfiguriert ist, um eine Filterung auszuführen;
einen Ratenzähler (400), welcher konfiguriert ist, um, basierend auf einem Signal, welches durch den einstellbaren Filter (200, 400) filtriert wird, eine Zählrate von Ereignissen zu schätzen, welche durch einen Strahlungsdetektor (100) erfasst werden;
eine Steuerung (400), welche konfiguriert ist, um ein Filtersteuersignal basierend auf einer geschätzten Zählrate zu erzeugen, welche die vom Ratenzähler (400) geschätzte Zählrate ist, und um das Filtersteuersignal an den Filter (200, 400) auszugeben, wobei das Filtersteuersignal den Filter (200, 400) dazu veranlasst, die Filterung zur Optimierung einer Energieausfösung einzustellen; und
einen Analog-Digital-Wandler (300), welcher konfiguriert ist, um das Signal von einem analogen zu einem digitalen Signal umzuwandeln, und welcher eine einstellbare Abtastrate aufweist, mit welcher das analoge Signale abgetastet wird;
**dadurch gekennzeichnet, dass**
die Steuerung (400) ferner konfiguriert ist, um ein Abtaststeuersignal basierend auf der geschätzten Zählrate zu erzeugen, und um das Abtaststeuersignal an den Analog-Digital-Wandler (300) auszugeben, wobei das Abtaststeuersignal angepasst ist, um den Analog-Digital-Wandler (300) dazu zu veranlassen, die Abtastrate basierend auf der geschätzten Zählrate einzustellen.

2. Vorrichtung zur Strahlungserfassung nach Anspruch 1, wobei der Filter (200) einen analogen einstellbaren Teil zum Einstellen der Filterung umfasst, wobei
der Filter (200) ein analoger Filter ist und der analoge einstellbare Teil des Filters eine RC-Zeitkonstante aufweist, welche durch das Filtersteuersignal eingestellt wird.

3. Vorrichtung zur Strahlungserfassung nach Anspruch 2, wobei die RC-Zeitkonstante von einem anfänglichen Wert um einen Betrag gekürzt wird, welcher eine direkte Beziehung zu einem Betrag aufweist, um welchen die geschätzte Zählrate über einen Schwellenwert steigt.

4. Vorrichtung zur Strahlungserfassung nach Anspruch 2, wobei der Filter (200) einen Widerstand oder einen Kondensator umfasst, welcher durch das Filtersteuersignal ein- und ausgeschaltet wird, um die RC-Zeitkonstante einzustellen.

5. Vorrichtung zur Strahlungserfassung nach Anspruch 2, wobei:
der Filter (200) eine spannungsgesteuerte Komponente umfasst, welche zumindest einen von einem spannungsgesteuerten Kondensator, einem spannungsgesteuerten Diodenkondensator, und einem spannungsgesteuerten Widerstand umfasst; und
das Filtersteuersignal eine Vorspannung ist, welche die spannungsgesteuerte Komponente einstellt, um die RC-Zeitkonstante des Filters einzustellen.

6. Vorrichtung zur Strahlungserfassung nach Anspruch 2, wobei der Filter (200) ein Filter mit einstellbarer Bandbreite ist.

7. Vorrichtung zur Strahlungserfassung nach Anspruch 2, wobei:
der Analog-Digital-Wandler (ADC) (300) konfiguriert ist, um das Ausgangssignal vom Filter (200) von einem analogen Signal zu einem digitalen Signal umzuwandeln und um das digitale Signal an den Ratenzähler (400) auszugeben.

8. Vorrichtung zur Strahlungserfassung nach Anspruch 1, wobei
der Filter (400) ein digitaler Filter ist und einen digitalen einstellbaren Teil umfasst, um die Filterung einzustellen, und der digitale einstellbare Teil durch das Filtersteuersignal eingestellt wird.

9. Vorrichtung zur Strahlungserfassung nach Anspruch 8, wobei:
der Analog-Digital-Wandler (ADC) (300) konfiguriert ist, um ein Ausgangssignal vom Strahlungsdetektor (100) von einem analogen Signal zu einem digitalen Signal umzuwandeln und um das digitale Signal an den Ratenzähler (400) auszugeben.

10. Vorrichtung zur Strahlungserfassung nach Anspruch 9, ferner umfassend:
einen analogen Filter (200), welcher konfiguriert ist, um das Ausgangsignal vom Strahlungsdetektor (100) zu filtern, bevor der ADC (300) das analoge Signal in ein digitales Signal umwandelt, wobei der analoge Filter (200) einen analogen einstellbaren Teil umfasst, um eine analoge Filterung einzustellen, welche auf das analoge Signal angewendet wird, wobei
die Steuerung (400) ferner konfiguriert ist, um ein analoges Filtersteuersignal basierend auf der geschätzten Zählrate zu erzeugen und um das analoge Filtersteuersignal an den analogen Filter (200) auszugeben, wobei das analoge Filtersteuersignal den analogen Filter (200) dazu veranlasst, die analoge Filterung einzustellen, um die Energieauflösung zu optimieren.

11. Strahlungserfassungssystem, umfassend:
einen Strahlungsdetektor (100), welcher konfiguriert ist, um ein analoges Signal zu erzeugen;
einen analogen Filter (200), welcher konfiguriert ist, um das analoge Signal zu filtern, wobei der analoge Filter (200) einen analogen einstellbaren Teil umfasst, um die Filterung einzustellen, welche auf das analoge Signal angewendet wird;
einen Analog-Digital-Wandler (ADC) (300), welcher konfiguriert ist, um das gefilterte analoge Signal in ein digitales Signal umzuwandeln, wobei der ADC (300) einen einstellbaren Abtastteil umfasst, um eine Abtastrate einzustellen, mit welcher das analoge Signal abgetastet wird; und
eine digitale Signalverarbeitungseinheit (400), welche konfiguriert ist um (1) vom digitalen Signal eine Zählrate von Ereignissen zu schätzen, welche vom Strahlungsdetektor erfasst werden, (2) ein analoges Filtersteuersignal basierend auf der geschätzten Zählrate zu erzeugen, und (3) das analoge Filtersteuersignal an den analogen einstellbaren Teil des analogen Filters (200) auszugeben, um die Filterung einzustellen, welche auf das analoge Signal angewendet wird, um die Energieauflösung zu optimieren;
**dadurch gekennzeichnet, dass**
die digitale Signalverarbeitungseinheit (400) ferner konfiguriert ist, um ein Abtaststeuersignal basierend auf der geschätzten Zählrate zu erzeugen und um das Abtaststeuersignal an den einstellbaren Abtastteil des ADC (300) auszugeben, um die Abtastrate einzustellen, mit welcher das analoge Signal abgetastet wird.

12. Strahlungserfassungssystem nach Anspruch 11, wobei der Strahlungsdetektor (100) einer von einem Photovervielfacher (PMT), einem auf Cadmium-Tellurid (CdTe) basierten Strahlungsdetektor und einem Silizium-Photovervielfacher (SiPM) ist.

13. Strahlungserfassungsverfahren, umfassend:
Schätzen, durch einen Ratenzähler (400), einer Zählrate von Ereignissen, welche durch einen Strahlungsdetektor (100) basierend auf einem Signal erfasst werden, welches durch einen Filter (200, 400) gefiltert worden ist, welcher einen einstellbaren Parameter aufweist, und von einem analogen Signal in ein digitales Signal durch einen Analog-Digital-Wandler (300) umgewandelt worden ist, welcher eine einstellbare Abtastrate aufweist, mit welcher das analoge Signal abgetastet wird;
Erzeugen, basierend auf einer geschätzten Zählrate, die die vom Ratenzähler (400) geschätzte Zählrate ist, eines Filtersteuersignals, um den Parameter des Filters (200, 400) einzustellen;
Übertragen des Filtersteuersignals an den Filter (200, 400), um eine Energieauflösung zu optimieren;
**gekennzeichnet durch** das
Erzeugen, basierend auf der geschätzten Zählrate, eines Abtaststeuersignals, um die Abtastrate des ADC (300) einzustellen; und
Übertragen des Abtaststeuersignals an den Analog-Digital-Wandler (300).

14. Strahlungserfassungsverfahren nach Anspruch 13, ferner umfassend:
Umwandeln des gefilterten Signals von einem analogen Signal in ein digitales Signal durch einen Analog-Digital-Wandler (ADC) (300), wobei der ADC (300) eine Abtastrate aufweist, mit welcher das analoge Signal abgetastet wird.

## Revendications

1. Dispositif de détection de rayonnement, comprenant :
un filtre réglable (200, 400) qui est configuré de manière à ce qu'il réalise un filtrage ;
un compteur de taux (400) qui est configuré de manière à ce qu'il estime, sur la base d'un signal qui est filtré au moyen du filtre réglable (200, 400), un taux de comptage d'événements qui sont détectés au moyen d'un détecteur de rayonnement (100) ;
un contrôleur (400) qui est configuré de manière à ce qu'il génère un signal de commande de filtrage sur la base d'un taux de comptage estimé qui est le taux de comptage qui est estimé au moyen du compteur de taux (400), et de manière à ce qu'il émette en sortie le signal de commande de filtrage sur le filtre (200, 400), le signal de commande de filtrage amenant le filtre (200, 400) à régler le filtrage de manière à optimiser une résolution en termes d'énergie ; et
un convertisseur analogique-numérique (300) qui est configuré de manière à ce qu'il convertisse le signal depuis un signal analogique en un signal numérique et qui présente une fréquence d'échantillonnage réglable à laquelle le signal analogique est échantillonné ;
**caractérisé en ce que** :
le contrôleur (400) est en outre configuré de manière à ce qu'il génère un signal de commande d'échantillonnage sur la base du taux de comptage estimé et de manière à ce qu'il émette en sortie le signal de commande d'échantillonnage sur le convertisseur analogique-numérique (300), le signal de commande d'échantillonnage étant adapté de manière à ce qu'il amène le convertisseur analogique-numérique (300) à régler la fréquence d'échantillonnage sur la base du taux de comptage estimé.

2. Dispositif de détection de rayonnement selon la revendication 1, dans lequel le filtre (200) inclut une partie réglable analogique pour régler le filtrage, dans lequel :
le filtre (200) est un filtre analogique et la partie réglable analogique du filtre présente une constante de temps RC qui est réglée au moyen du signal de commande de filtrage.

3. Dispositif de détection de rayonnement selon la revendication 2, dans lequel la constante de temps RC est réduite par rapport à une valeur initiale d'une quantité qui présente une relation directe avec une quantité dont le taux de comptage estimé augmente au-delà d'une valeur de seuil.

4. Dispositif de détection de rayonnement selon la revendication 2, dans lequel le filtre (200) inclut une résistance ou un condensateur qui est commuté(e) en fonctionnement et hors fonctionnement au moyen du signal de commande de filtrage de manière à régler la constante de temps RC.

5. Dispositif de détection de rayonnement selon la revendication 2, dans lequel :
le filtre (200) inclut un composant commandé en tension, lequel inclut au moins l'un parmi un condensateur commandé en tension, un condensateur à diode commandé en tension et une résistance commandée en tension ; et
le signal de commande de filtrage est une tension de polarisation qui règle le composant commandé en tension de manière à régler la constante de temps RC du filtre.

6. Dispositif de détection de rayonnement selon la revendication 2, dans lequel le filtre (200) est un filtre réglable en termes de bande passante.

7. Dispositif de détection de rayonnement selon la revendication 2, dans lequel :
le convertisseur analogique-numérique (ADC) (300) est configuré de manière à ce qu'il convertisse le signal qui est émis en sortie depuis le filtre (200) depuis un signal analogique en un signal numérique et de manière à ce qu'il émette en sortie le signal numérique sur le compteur de taux (400).

8. Dispositif de détection de rayonnement selon la revendication 1, dans lequel :
le filtre (400) est un filtre numérique et il inclut une partie réglable numérique pour régler le filtrage, et la partie réglable numérique est réglée au moyen du signal de commande de filtrage.

9. Dispositif de détection de rayonnement selon la revendication 8, dans lequel :
le convertisseur analogique-numérique (ADC) (300) est configuré de manière à ce qu'il convertisse un signal qui est émis en sortie depuis le détecteur de rayonnement (100) depuis un signal analogique en un signal numérique et de manière à ce qu'il émette en sortie le signal numérique sur le filtre numérique (400).

10. Dispositif de détection de rayonnement selon la revendication 9, comprenant en outre :
un filtre analogique (200) qui est configuré de manière à ce qu'il filtre le signal qui est émis en sortie depuis le détecteur de rayonnement (100) avant que l'ADC (300) ne convertisse le signal analogique en le signal numérique, le filtre analogique (200) incluant une partie réglable analogique pour régler un filtrage analogique qui est appliqué sur le signal analogique ; dans lequel :
le contrôleur (400) est en outre configuré de manière à ce qu'il génère un signal de commande de filtre analogique sur la base du taux de comptage estimé et de manière à ce qu'il émette en sortie le signal de commande de filtrage analogique sur le filtre analogique (200), le signal de commande de filtrage analogique amenant le filtre analogique (200) à régler le filtrage analogique de manière à optimiser la résolution en termes d'énergie.

11. Système de détection de rayonnement, comprenant :
un détecteur de rayonnement (100) qui est configuré de manière à ce qu'il génère un signal analogique ;
un filtre analogique (200) qui est configuré de manière à ce qu'il filtre le signal analogique, le filtre analogique (200) incluant une partie réglable analogique pour régler un filtrage qui est appliqué sur le signal analogique ;
un convertisseur analogique-numérique (ADC) (300) qui est configuré de manière à ce qu'il convertisse le signal analogique filtré en un signal numérique, dans lequel l'ADC (300) inclut une partie d'échantillonnage réglable pour régler une fréquence d'échantillonnage à laquelle le signal analogique est échantillonné ; et
une unité de traitement de signal numérique (400) qui est configurée de manière (1) à ce qu'elle estime, à partir du signal numérique, un taux de comptage d'événements qui sont détectés au moyen du détecteur de rayonnement, de manière (2) à ce qu'elle génère un signal de commande de filtrage analogique sur la base du taux de comptage estimé et de manière (3) à ce qu'elle émette en sortie le signal de commande de filtrage analogique sur la partie réglable analogique du filtre analogique (200) de manière à régler le filtrage qui est appliqué sur le signal analogique dans le but d'optimiser une résolution en termes d'énergie ;
**caractérisé en ce que** :
l'unité de traitement de signal numérique (400) est en outre configurée de manière à ce qu'elle génère un signal de commande d'échantillonnage sur la base du taux de comptage estimé et de manière à ce qu'elle émette en sortie le signal de commande d'échantillonnage sur la partie d'échantillonnage réglable de l'ADC (300) de manière à régler la fréquence d'échantillonnage à laquelle le signal analogique est échantillonné.

12. Système de détection de rayonnement selon la revendication 11, dans lequel le détecteur de rayonnement (100) est l'un parmi un tube photomultiplicateur (PMT), un détecteur de rayonnement basé sur tellure de cadmium (CdTe) et un photomultiplicateur au silicium (SiPM).

13. Procédé de détection de rayonnement, comprenant :
l'estimation, au moyen d'un compteur de taux (400), d'un taux de comptage d'événements qui sont détectés au moyen d'un détecteur de rayonnement (100) sur la base d'un signal qui a été filtré au moyen d'un filtre (200, 400) qui comporte un paramètre réglable et qui est converti depuis un signal analogique en un signal numérique au moyen d'un convertisseur analogique-numérique (300) qui présente une fréquence d'échantillonnage réglable à laquelle le signal analogique est échantillonné ;
la génération, sur la base d'un taux de comptage estimé qui est le taux de comptage qui est estimé au moyen du compteur de taux (400), d'un signal de commande de filtrage pour régler le paramètre du filtre (200, 400) ;
la transmission du signal de commande de filtrage au filtre (200, 400) de manière à optimiser une résolution en termes d'énergie ;
**caractérisé par** :
la génération, sur la base du taux de comptage estimé, d'un signal de commande d'échantillonnage pour régler la fréquence d'échantillonnage de l'ADC (300) ; et
la transmission du signal de commande d'échantillonnage au convertisseur analogique-numérique (300).

14. Procédé de détection de rayonnement selon la revendication 13, comprenant en outre :
la conversion du signal filtré depuis un signal analogique en un signal numérique au moyen d'un convertisseur analogique-numérique (ADC) (300), l'ADC (300) présentant une fréquence d'échantillonnage à laquelle le signal analogique est échantillonné.
